# EUROPEAN PATENT APPLICATION

(11) **EP 3 772 716 A1**
(43) Date of publication of application: **10.02.2021**
(21) Application number: 20178168.9
(22) Date of filing: 04.06.2020
(51) Int. Cl.: G06Q 20/38, G06Q 20/06, G06Q 40/04

(54) **ELECTRONIC COMMUNITY CURRENCY OPERATION SYSTEM, ELECTRONIC COMMUNITY CURRENCY OPERATION SERVER, AND ELECTRONIC COMMUNITY CURRENCY OPERATION METHOD**

(30) Priority: 05.08.2019 JP 2019144068
(71) Applicant: Hitachi, Ltd., Tokyo 100-8280 (JP)
(72) Inventor: SATOH, Hiroki, Tokyo, 100-8280 (JP); MORIKI, Toshiomi, Tokyo, 100-8280 (JP)
(74) Representative: MERH-IP Matias Erny Reichl Hoffmann Patentanwälte PartG mbB

(57) **Abstract**

An electronic community currency operation system S includes a user terminal 1, a store terminal 2 and a management server 3 connected via a network CN1. The management server 3 includes a premium amount determination unit F38 which receives, from the user terminal 1, an issue request of an electronic community currency received from a user, and determines an additional amount to be added to an issue amount of the electronic community currency, which is to be issued according to the received issue request, according to a current amount of circulation relative to an overall maximum issue of the electronic community currency, and a community currency issuing unit F35 which issues, according to the issue request, the electronic community currency in which the determined additional amount has been added to the issue amount, and notifies the issued electronic community currency to the user terminal 1.

## Description

### TECHNICAL FIELD

The present invention relates to an electronic community currency operation system, an electronic community currency operation server, and an electronic community currency operation method.

### BACKGROUND ART

As a means for revitalizing the regional economy, community currencies are once again attracting attention. A community currency is a general name of a currency that is circulated locally in a specific region, and, because it can only be used in a specific region, it is possible to cause money outside a specific region to flow into that specific region, and prevent money within a specific region from flowing outside the specific region. Thus, revitalization and increase in the interaction of people of a specific region can be expected.

Moreover, in recent years, electronic currencies such as virtual currencies and electronic points are becoming popular. Unlike paper currencies and conventional paper community currencies, virtual currencies and electronic points are managed electronically with a computer, and may be used anywhere so as long as the user can connect to a network.

With conventional paper community currencies, various types of service change, including cashing a community currency into a legal currency such as Japanese yen, or changing the method of using the community currency, were extremely difficult. The reason for this was because, since conventional paper community currencies are circulated with paper, in certain cases it was necessary to collect and reissue all of the community currencies.

Meanwhile, electronic currencies such as virtual currencies and electronic points are used as alternative currencies that may be used anywhere in the country based on a legal currency such as Japanese yen, or by specific companies or stores for acquiring users through provision of benefits to such users, and are unable to seek the revitalization of a specific region.

Thus, PTL 1 discloses a technology of providing a scheme which is configured from a terminal and a server device connected to a network, wherein the server issues a community currency according to a community currency issue request from the terminal.

According to the technology disclosed in PTL 1, it is possible to electronically issue a community currency, and provide a scheme of facilitating the various types of service change, which was difficult with the conventional paper community currencies, and an electronic community currency service which contributes to the revitalization of a regional economy, which is the characteristic of a community currency.

### CITATION LIST

### PATENT LITERATURE

[PTL 1] Japanese Unexamined Patent Application Publication No. 2018-073268

### SUMMARY OF THE INVENTION

### PROBLEMS TO BE SOLVED BY THE INVENTION

Nevertheless, PTL 1 does not give consideration to a scheme to resolve the challenges for actually introducing and operating a community currency, and the actual introduction of a community currency is difficult. Here, there are the following three challenges in introducing a community currency. The first challenge is the means for providing to the users the benefits of using the community currency. The second challenge is the means for controlling the amount of issue of the community currency. The third challenge is the means for allotting the operating cost of the community currency.

The first challenge can be resolved based on a means of adding a value to the community currency that is higher than a legal currency such as Japanese yen. This means is in widespread use as good value points through use of electronic points.

The reason that the second challenge needs to be resolved is now explained. Upon introducing a community currency, for instance, there is a legal restriction in that the total amount must be 10,000,000 yen or less and the period of use must be within 6 months in handling a community currency without a permit. Moreover, in order to prevent inflation caused by the unregulated issue of community currencies and to accommodate limited time use of community currencies in events or the like, it is necessary to accurately manage the current amount of issue and the current amount of circulation of the community currencies.

The reason that the third challenge needs to be resolved is now explained. Unlike electronic points and virtual currencies operated by a specific corporation, community currencies are jointly operated by various store operators, large and small. Thus, a means for evenly allotting the operating cost of the community currency to the joint operators is required.

In the actual operation of community currencies, required is dynamic control to regulate the amount of issue or the amount of circulation for increasing the amount of issue in order to increase the number of users within a specified period, or suppressing the issue of community currencies to a specified amount of issue. In addition, even when performing the foregoing dynamic control, a means for evenly allotting the operating cost is required.

The present invention was devised in light of the foregoing points, and an object of this invention is to provide an electronic community currency operation system, an electronic community currency operation server, and an electronic community currency operation method capable of accurately managing the current amount of issue and the current amount of circulation of an electronic community currency, and evenly allotting the operating cost required for dynamically controlling the amount of circulation of the electronic community currency.

### MEANS TO SOLVE THE PROBLEMS

In order to achieve the foregoing object, the present invention provides an electronic community currency operation system including a user terminal, a store terminal and a management server connected via a network, wherein the user terminal sends, to the management server, an issue request of an electronic community currency received from a user, wherein the management server includes: an additional amount determination unit which determines an additional amount to be added to an issue amount of the electronic community currency, which is to be issued according to the issue request received from the user terminal, according to a current amount of circulation or a total amount of issue relative to an overall maximum issue of the electronic community currency; and an issuing unit which issues, according to the issue request, the electronic community currency in which the additional amount determined by the additional amount determination unit has been added to the issue amount, and notifies the issued electronic community currency to the user terminal, and wherein the user terminal receives, from the user, a settlement request using a total amount of the issue amount of the electronic community currency and the additional amount notified by the management server, and sends the received settlement request to the store terminal.

### ADVANTAGEOUS EFFECTS OF THE INVENTION

According to the present invention, for instance, it is possible to provide an electronic community currency operation system, an electronic community currency operation server, and an electronic community currency operation method capable of accurately managing the current amount of issue and the current amount of circulation of an electronic community currency, and evenly allotting the operating cost of the electronic community currency.

### BRIEF DESCRIPTION OF DRAWINGS

[Fig. 1]

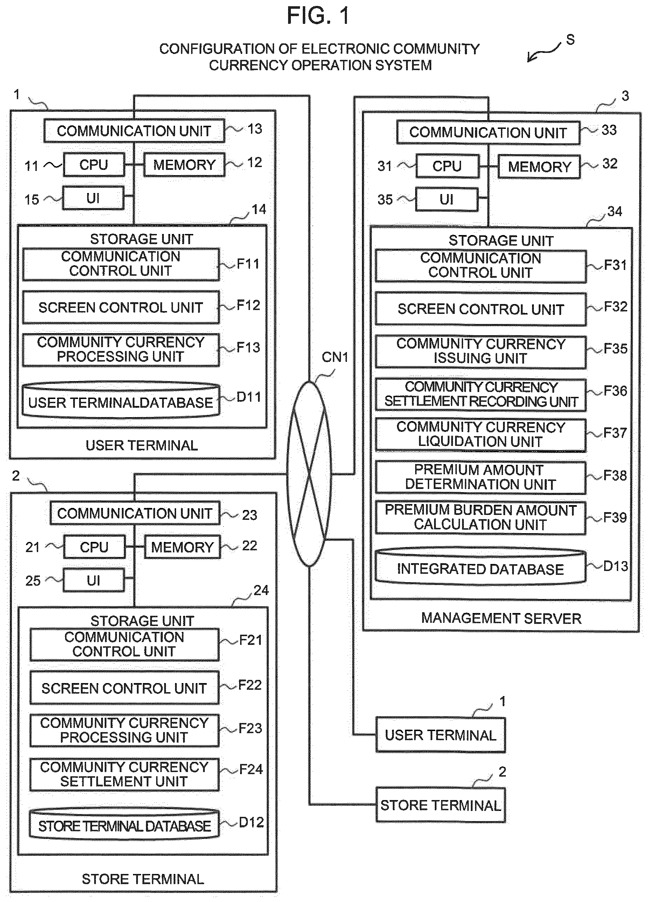

   Fig. 1 is a block diagram showing a configuration example of the electronic community currency operation system according to an embodiment of the present invention.
[Fig. 2]

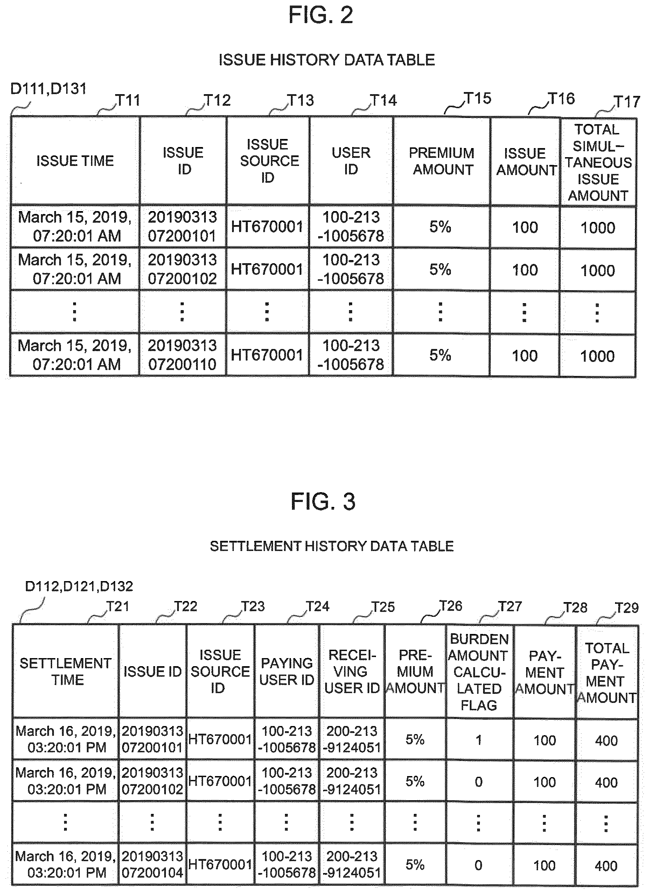

   Fig. 2 is a diagram showing an example of the issue history data table according to an embodiment of the present invention.
[Fig. 3]
   Fig. 3 is a diagram showing an example of the settlement history data table according to an embodiment of the present invention.
[Figs. 4A and 4B]

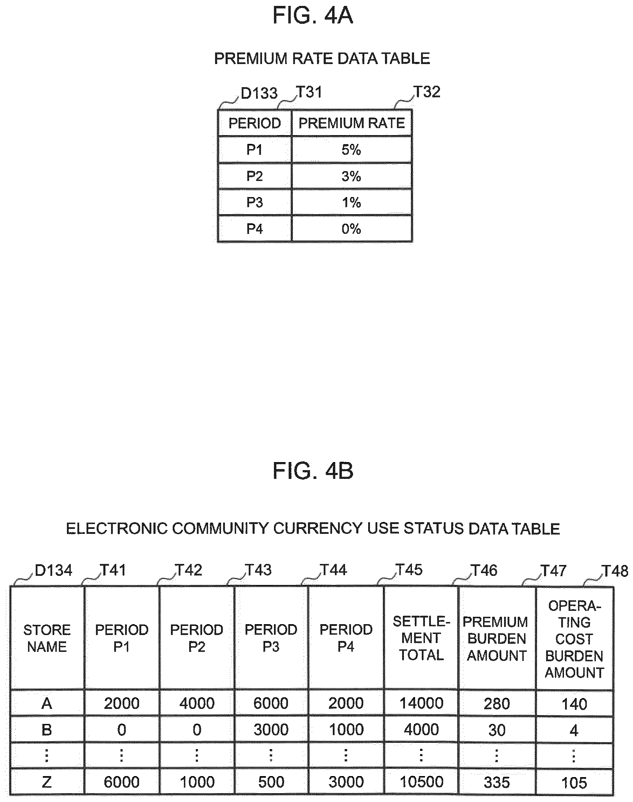

   Figs. 4A and 4B are diagrams showing an example of the premium rate data table and the electronic community currency use status data table according to an embodiment of the present invention.
[Fig. 5]

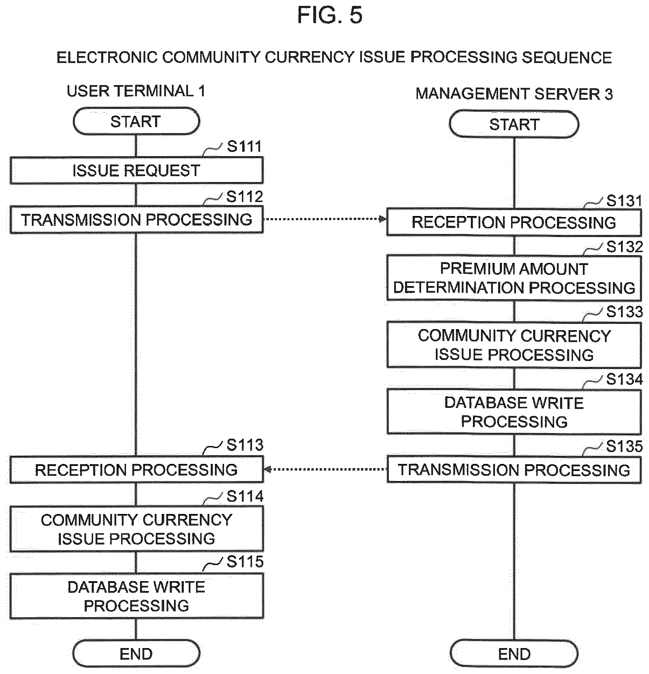

   Fig. 5 is a sequence diagram showing an example of the electronic community currency issue processing according to an embodiment of the present invention.
[Fig. 6]

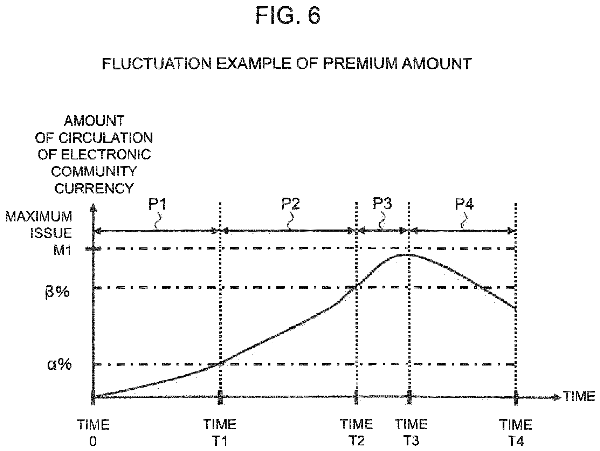

   Fig. 6 is a diagram explaining an example of the determination method of the premium amount performed by the management server according to an embodiment of the present invention.
[Fig. 7]

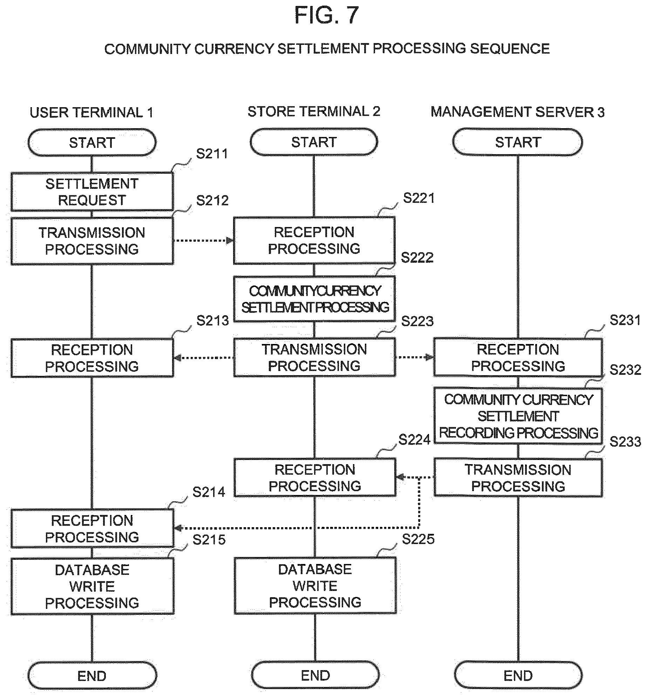

   Fig. 7 is a sequence diagram showing an example of the electronic community currency settlement processing according to an embodiment of the present invention.
[Fig. 8]

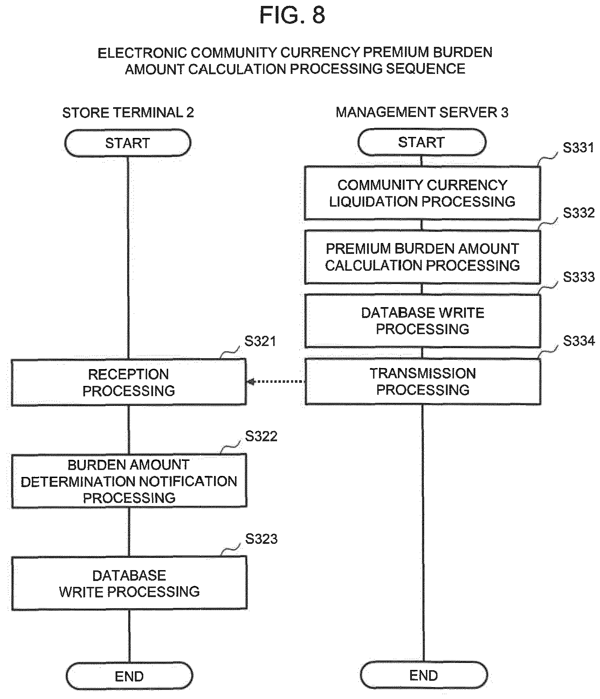

   Fig. 8 is a sequence diagram showing an example of the electronic community currency premium burden amount determination processing according to an embodiment of the present invention.

### DESCRIPTION OF EMBODIMENTS

An embodiment of the present invention is now explained with reference to the appended drawings. In the following explanation, as a general rule, the same or similar components and processes are given the same reference numeral, and any redundant explanation regarding the same functions and processes is omitted. Moreover, the configurations and processes explained below are merely examples, and there is no intention of limiting the embodiments of the present invention to the following embodiments. Moreover, a part or all of the respective embodiments and modified examples may be combined within the technical concept and scope of framework of the present invention.

The respective drawings referred to in the following explanation show the overview of the embodiments to the extent required for the understanding and working of the present invention, and the scope of the present invention is not limited to the configuration of the respective drawings.

### [Embodiments]

### (Configuration example of electronic community currency operation system S)

Fig. 1 is a block diagram showing a configuration example of the electronic community currency operation system S according to an embodiment of the present invention. The electronic community currency operation system S is a system for issuing and managing an electronic community currency which is to be used for a limited time only and in which the amount of issue or the amount of circulation thereof is capped. The electronic community currency operation system S comprises one or more user terminals 1, one or more store terminals 2, and a management server 3 communicably connected to a network CN1 via wireless or wired connection.

The user terminal 1 is a computer device such as a smartphone held by each user of the electronic community currency. The user terminal 1 comprises a CPU 11, a memory 12, a communication unit 13, a storage unit 14, and a UI (User Interface) 15 having an input function of a touch panel or the like and an output function of a display or the like. The user terminal 1 realizes the respective functions required as the user terminal 1 by the CPU 11 coordinating with the memory 12 and executing predetermined computer programs.

As shown in Fig. 1, the user terminal 1 comprises, as the respective functions required as the user terminal 1, a communication control unit F11, a screen control unit F12, a community currency processing unit F13, and a user terminal database D11. The user terminal database D11 stores an issue history data table D111 (refer to Fig. 2) and a settlement history data table D112 (refer to Fig. 3) described later.

The communication control unit F11 controls the communication unit 13 so that the user terminal 1 can communicate with the store terminal 2 and the management server 3 via the network CN1. The screen control unit F12 controls the input and output of the UI 15.

The community currency processing unit F13 sends an issue request of the electronic community currency to the management server 3 according to a request of the user of the user terminal 1, receives information of the issued electronic community currency from the management server 3, and registers the received information in the issue history data table D111. Moreover, the community currency processing unit F13 sends a settlement request using the electronic community currency to the store terminal 2 according to a request of the user of the user terminal 1, and registers, in the settlement history data table D112, information of the electronic community currency used in the settlement by the store terminal 2.

The store terminal 2 is a computer device such as a smartphone or a tablet terminal owned by the store operator participating in the operation of the electronic community currency. The store terminal 2 comprises a CPU 21, a memory 22, a communication unit 23, a storage unit 24, and a UI 25 having an input function of a touch panel or the like and an output function of a display or the like. The store terminal 2 realizes the respective functions required as the store terminal 2 by the CPU 21 coordinating with the memory 22 and executing predetermined computer programs.

As shown in Fig. 1, the store terminal 2 comprises, as the respective functions required as the store terminal 2, a communication control unit F21, a screen control unit F22, a community currency processing unit F23, a community currency settlement unit F24, and a store terminal database D12. The store terminal database D12 stores a settlement history data table D121 (refer to Fig. 3) described later.

The communication control unit F21 controls the communication unit 23 so that the store terminal 2 can communicate with the user terminal 1 and the management server 3 via the network CN1. The screen control unit F22 controls the input and output of the UI 25.

The community currency processing unit F23 has the same issue request function and settlement request function of the electronic community currency as the community currency processing unit F13 of the user terminal 1. For example, the community currency processing unit F23 can send, to another store terminal 2, a settlement request using the electronic community currency received from the user of the user terminal 1 according to a request of the user of the store terminal 2. Since the electronic community currency that is re-circulated is excluded from the calculation of the premium burden amount described later (burden amount of the additional amount), "1" is set in the burden amount calculated flag T27 described later in the settlement history data table D121 so that the premium burden amount is not calculated redundantly.

Accordingly, the user of the store terminal 2 can use the electronic community currency received from the user of the user terminal 1 for the settlement of another user holding another store terminal 2. Note that, in this embodiment, the explanation of the issue history data table and the settlement history data table related to the community currency processing unit F23 is omitted.

The community currency settlement unit F24 determines whether settlement using the electronic community currency is possible according to the settlement request from the user terminal 1, and executes the settlement processing using the electronic community currency when settlement is possible. Furthermore, the community currency settlement unit F24 sends the information of the electronic community currency used in the settlement to the user terminal 1 and the management server 3, and registers such information in the settlement history data table D121.

The management server 3 is a computer device, and comprises a CPU 31, a memory 32, a communication unit 33, a storage unit 34, and a Ul 35 having an input function of a touch panel or the like an an output function of a display or the like. The management server 3 realizes the respective functions required as the management server 3 by the CPU 31 executing predetermined computer programs.

As shown in Fig. 1, the management server 3 comprises, as the respective functions required as the management server 3, a communication control unit F31, a screen control unit F32, a community currency issuing unit F35, a community currency settlement recording unit F36, a community currency liquidation unit F37, a premium amount determination unit D38, a premium burden amount calculation unit F39, and an integrated database D13. These respective functions required as the management server 3 may also be provided as a cloud service.

The integrated database D13 stores an issue history data table D131 (refer to Fig. 2), a settlement history data table D132 (refer to Fig. 3), a premium rate data table D133 (refer to Fig. 4A), and an electronic community currency use status data table D134 (refer to Fig. 4B) described later.

The communication control unit F31 controls the communication unit 33 so that the management server 3 can communicate with the user terminal 1 and the store terminal 2 via the network CN1. The screen control unit F32 controls the input and output of the UI 35.

The community currency issuing unit F35 determines whether the electronic community currency can be issued according to an issue request from the user terminal 1, executes the issue processing of the electronic community currency when the electronic community currency can be issued, sends information of the issued electronic community currency to the user terminal 1, and registers such information in the issue history data table D131. In performing the issue processing of the electronic community currency, the electronic community currency is issued in an amount to which the current premium amount (additional amount) determined by the premium amount determination unit F38 described later was added to the legal currency to be exchanged for the electronic community currency by the user of the user terminal 1 that sent the issue request. The community currency processing unit F13 of the user terminal 1 receives the information of the electronic community currency issued by the management server 3, and registers the received information in the issue history data table D111.

The community currency settlement recording unit F36 registers the information of the electronic community currency used in the settlement by the store terminal 2 according to a request from the store terminal 2, and registers the information in the settlement history data table D132.

The community currency liquidation unit F37 executes the liquidation processing of converting the electronic community currency to a legal currency at an arbitrary timing (for example, upon expiration of the validity period of the electronic community currency).

The premium amount determination unit F38 determines the premium amount of the electronic community currency to be added to the legal currency upon conversion from the legal currency into the electronic community currency. While the premium amount is determined according to the current amount of issue or the current amount of circulation of the electronic community currency, the details will be explained later.

The premium burden amount calculation unit F39 calculates, for each store and for each period, the burden amount to be borne by each store that received the payment of the electronic community currency with the store terminal 2. The premium burden amount calculation unit F39 stores the calculation result of the premium burden amount in the electronic community currency use status data table D134 (refer to Fig. 4B) of the database D13, and sends the calculation result to each store terminal 2. Each store terminal 2 stores the received premium burden amount in the database D12. Details of the calculation processing of the premium burden amount will be explained later.

### (Issue history data table)

Fig. 2 is a diagram showing an example of the issue history data tables D111, D131 according to an embodiment of the present invention. The issue history data tables D111, D131 are of the same table format, and comprise the columns of an issue time T11, an issue ID_T12, an issue source ID_T13, a user ID_T14, a premium amount T15, an issue amount T16, and a total simultaneous issue amount T17. One record of the issue history data tables D111, D131 is the minimum unit of the issue and settlement of the electronic community currency.

The issue history data table D111 is stored in the user terminal database D11 of the user terminal 1, and stores information of the electronic community currency issued only to the user of that user terminal 1. The issue history data table D131 is stored in the integrated database D13 of the management server 3, and stores information of all electronic community currencies that were issued to the users of the respective user terminals 1.

The issue time T11 records the date and time that the electronic community currency of the corresponding record was issued. The issue ID_T12 records the ID for identifying the electronic community currency of the corresponding record which is equivalent to the paper currency of the minimum unit or the coin currency of the minimum unit. The issue source ID_T13 records the ID of the management server 3 that issued the electronic community currency of the corresponding record. The user ID_T14 records the ID of the user that requested the issue of the electronic community currency of the corresponding record.

The premium amount T14 records the premium amount that was added to the issue amount of the electronic community currency of the corresponding record. The issue amount T16 is a basic face value of the electronic community currency of the corresponding record, and records the minimum unit of the electronic community currency. The total simultaneous issue amount T17 records the total issue amount of the electronic community currency that is issued simultaneously with the electronic community currency of the corresponding record.

In the example of Fig. 2, each electronic community currency in which the issue ID is "2019031307200101 to 2019031307200110", the issue source ID is "HT670001", and the user ID is "100-2013-1005678" is the electronic community currency of each minimum unit in which the issue amount is "100" and the premium amount is "5%" among those in which the total simultaneous issue amount is "1000". The value of the electronic community currency in the foregoing case is the total amount in which a premium amount of 5% has been added to the issue amount when the legal currency is 100, such as 100 + 100 × 5% = 105.

By referring to the issue history data tables D111, D131, it is possible to comprehend when and how much electronic community currency was issued by who to whom, as well as comprehend the premium amount for each minimum unit of the electronic community currency. Moreover, the amount of issue of the electronic community currency can be accurately managed based on the issue history data table D131.

### (Settlement history data table)

Fig. 3 is a diagram showing an example of the settlement history data tables D112, D122, D132 according to an embodiment of the present invention. The settlement history data tables D112, D122, D132 are of the same table format, and comprise the columns of an issue time T21, an issue ID_T22, an issue source ID_T23, a paying user ID_T24, a receiving user ID_T25, a premium amount T26, a burden amount calculated flag T27, a payment amount T28, and a total payment amount T29. Similar to the issue history data tables D111, D131, one record of the settlement history data tables D112, D121, D132 is the minimum unit of the issue and settlement of the electronic community currency.

The settlement history data table D112 is stored in the user terminal database D11 of the user terminal 1, and stores only the settlement history of the electronic community currency that was settled by the user of that user terminal 1. The settlement history data table D122 is stored in the store terminal database D12 of the store terminal 2, and stores the settlement history of all electronic community currencies that were settled with that store terminal 2. The settlement history data table D132 is stored in the integrated database D13 of the management server 3, and stores the settlement history of all electronic community currencies that were settled by the users of the respective user terminals 1.

The settlement time T21 records the date and time that the electronic community currency of the corresponding record was settled. The issue ID_T22 records the ID for identifying the electronic community currency of the minimum unit of the corresponding record. The issue source ID_T23 records the ID of the management server 3 that issued the electronic community currency of the corresponding record. The paying user ID_T24 records the ID of the user that performed settlement with the electronic community currency of the corresponding record. The receiving user ID_T25 records the ID of the user of the store terminal 2 that received the electronic community currency of the corresponding record in the settlement.

The premium amount T26 records the premium amount that was added to the electronic community currency of the corresponding record.

The burden amount calculated flag T27 stores a flag indicating whether the electronic community currency of the corresponding record has been liquidated and the calculation of the premium burden amount of each store has been completed. The record of the electronic community currency in which the premium burden amount calculated flag T27 is "1" is excluded from the calculation of the premium burden amount in the premium burden amount calculation processing described later.

The payment amount T28 is a basic face value of the electronic community currency of the corresponding record, and records the minimum unit of the electronic community currency. The total payment amount T29 records the total payment amount of the electronic community currency that was paid simultaneously with the settlement request of the electronic community currency of the corresponding record.

When the electronic community currency stored in the issue history data tables D111, D131 is used for settlement, the value of the issue ID_T12 is recorded in the issue ID_T22, the value of the issue source ID_T13 is recorded in the issue source ID_T23, the value of the user IDT14 is recorded in the paying user IDT24, the value of the premium amount T15 is recorded in the premium amount T26, the value of the issue amount T16 is recorded in the payment amount T28, the ID of the store terminal 2 that accepted the settlement is recorded in the receiving user ID_T25, and the total amount of the electronic community currency used in the simultaneous settlement is recorded in the total payment amount T29, respectively.

By referring to the settlement history data tables D112, D121, D131, it is possible to comprehend when and how much electronic community currency was used for settlement by who to whom, as well as comprehend the circulation of the electronic community currency in terms of the minimum unit. Moreover, the amount of circulation of the electronic community currency can be accurately managed based on the settlement history data table D131 and the issue history data table D131.

### (Premium rate data table and electronic community currency use status data table)

Figs. 4A and 4B are diagrams showing an example of the premium rate data table D133 and the electronic community currency use status data table D134 according to an embodiment of the present invention.

The premium rate data table D133 shown in Fig. 4A comprises the columns of a period T31 and a premium rate T32. The example of Fig. 4A shows that, for instance, the premium rate (addition rate) during a period P1 is 5%, the premium rate during a period P2 is 3%, the premium rate during a period P3 is 1%, and the premium rate during a period P4 is 0%.

Moreover, the electronic community currency use status data table D134 shown in Fig. 4B comprises the columns of a store name T41, a period P1_T42, a period P2_T43, a period P3_T44, a period P4_T45, a settlement total T46, a premium burden amount T47, and an operating cost burden amount T48.

In the example of Fig. 4B, the amount settled with the electronic community currency that was issued during the period P1, the amount settled with the electronic community currency that was issued during the period P2, the amount settled with the electronic community currency that was issued during the period P3, and the amount settled with the electronic community currency that was issued during the period P4 in the respective stores of a store A, a store B, ..., a store Z are recorded, respectively.

The example of Fig. 4B shows that, in the store A, the amount settled with the electronic community currency that was issued during the period P1 is 2000, the amount settled with the electronic community currency that was issued during the period P2 is 4000, the amount settled with the electronic community currency that was issued during the period P3 is 6000, the amount settled with the electronic community currency that was issued during the period P4 is 2000, and in total the amount of 14000 has been settled. Furthermore, the example of Fig. 4B shows that the premium burden amount of the store A is 280, and the operating cost burden amount is 140. A specific example of the calculation processing of the premium burden amount and the operating cost burden amount will be described later.

Since it is possible to comprehend the transaction status of all issued electronic community currencies based on the settlement history data table D132, and aggregate the settlement amount for each period in which the premium rate is different for each store as in the electronic community currency use status data table D134, the even burden allotment of the operating cost (premium burden amount + operating cost burden amount) of the electronic community currency can be realized.

Note that the period is not limited to the four periods of period P1 to period P4.

### (Community currency issue processing)

The electronic community currency issue processing executed by the user terminal 1 and the management server 3 is now explained with reference to Fig. 5. Fig. 5 is a sequence diagram showing an example of the electronic community currency issue processing according to an embodiment of the present invention.

Foremost, in step S111, the community currency processing unit F13 of the user terminal 1 performs the issue request processing of the electronic community currency according to the user's request. In the issue request processing of the electronic community currency, the user terminal 1, for instance, activates an application, and receives an input of the issue request from the user designating the issue amount of the electronic community currency. Next, in step S112, the community currency processing unit F13 sends a message based on the issue request processing of step S111 to the management server 3.

Next, in step S131, the management server 3 receives the message from the user terminal 1. Next, in step S132, the premium amount determination unit F38 of the management server 3 determines the premium amount to be added to the issue amount of the electronic community currency so that it becomes a higher value when compared to the legal currency as the basis of exchange. The determination method of the premium amount will be explained later with reference to Fig. 6.

Next, in step S133, when the electronic community currency can be issued as a result of the foregoing determination, the community currency issuing unit F35 of the management server 3 performs the issue processing of the electronic community currency to which the premium amount determined in step S132 has been added. Next, in step S134, the community currency issuing unit F35 stores the issue processing result of the electronic community currency in the issue history data table D131 of the database D13. Next, in step S135, the management server 3 sends the issue processing result of the electronic community currency to the user terminal 1.

Next, in step S113, the community currency processing unit F13 of the user terminal 1 receives the issue processing result of the electronic community currency sent from the management server 3 in step S135. Next, in step S114, the community currency processing unit F13 performs the issue processing of the electronic community currency, and realizes a state in which the electronic community currency can be used with the user terminal 1. Next, in step S115, the community currency processing unit F13 stores the information of the issued electronic community currency in the issue history data table 111 of the database D11.

### (Determination method of premium amount)

The determination method of the premium amount in step S132 of Fig. 5 is now explained with reference to Fig. 6. Fig. 6 is a diagram explaining an example of the determination method of the premium amount performed by the management server according to an embodiment of the present invention. In the graph of Fig. 6, the horizontal axis represents the time, and the vertical axis represents the amount of circulation of the electronic community currency. The amount of circulation of the electronic community currency is the total amount of the uncashed electronic community currency of the cumulative issue amount. Let it be assumed that the electronic community currency is issued from time 0, and the validity period (entire issue period) of the electronic community currency expires at time T4.

In the period P1 from time 0 to time T1, because the amount of circulation of the electronic community currency is small at less than a% relative to the maximum issue M1 of the overall electronic community currency, the premium rate is set high (for example, 5%) in order to increase the amount of issue of the electronic community currency. When the premium rate is 5%, the value of the electronic community currency will become higher than the legal currency by 5%. Consequently, the active issue of the electronic community currency can be expected.

Next, in the period P2 from time T1 to time T2, because the amount of circulation of β%, which is higher than a%, relative to the maximum issue M1 is realized and a certain amount of electronic community currency has been issued, the premium rate is lowered, for example, to 3%, and stabilization of the issue and use of the electronic community currency is thereby promoted. Nevertheless, the premium rate is set to 1% from time T2, in which the amount of circulation becomes β% or higher relative to the maximum issue M1, to suppress the issue of the electronic community currency.

Furthermore, when the amount of circulation reaches the maximum issue M1, the premium rate is set to 0%, and the money exchange (liquidation) from the electronic community currency to the legal currency is promoted. Note that, as the method of promoting the money exchange, there is also a method of setting the premium rate to a negative value, and causing the money exchange from the community currency into the legal currency to be more beneficial.

Note that, while foregoing α and β are thresholds of the ratio of the amount of circulation relative to the maximum issue M1 for determining the period P1 to the period P4, they may be adjusted as needed in order to control the amount of circulation of the electronic community currency. Moreover, the period P1 to the period P4 may also be adjusted as needed by the issuer of the electronic community currency irrespective of the amount of circulation of the electronic community currency excluding the fact that the amount of circulation satisfies the condition of being equal to or less than the maximum issue M1. Moreover, the issue control of the electronic community currency may be performed based on the total amount of issue of the electronic community currency in substitute for the amount of circulation of the electronic community currency.

### (Electronic community currency settlement processing)

The electronic community currency settlement processing executed by the user terminal 1, the store terminal 2 and the management server 3 is now explained with reference to Fig. 7. Fig. 7 is a sequence diagram showing an example of the electronic community currency settlement processing according to an embodiment of the present invention.

Foremost, in step S211, the community currency processing unit F13 of the user terminal 1 performs the settlement request processing using the electronic community currency according to the user's request. In the settlement request processing using the electronic community currency, the user terminal 1, for instance, activates an application, and receives an input of the settlement request using the electronic community currency from the user. Next, in step S212, the community currency processing unit F13 sends a message based on the issue request processing of step S211 to the store terminal 2. The message sent to the store terminal 2 includes, for example, information for identifying the electronic community currency, such as the issue ID_T12, the issue source ID_T13, and the user ID_T14 of the electronic community currency.

Next, in step S221, the store terminal 2 receives the message sent from the user terminal 1 in step S212. Next, in step S222, the community currency settlement unit F24 of the store terminal 2 determines whether the settlement using the electronic community currency is possible according to the settlement request from the user terminal 1 and, when settlement is possible, executes the settlement processing using the electronic community currency with the total amount of the issue amount of the electronic community currency and the additional amount as the settlement amount.

Next, in step S223, the store terminal 2 sends the settlement result of step S222 to the user terminal 1 and the management server 3. In step S213, the user terminal 1 receives the settlement result from the store terminal 2. Moreover, in step S231, the management server 3 receives the settlement result from the store terminal 2.

In step S232 subsequent to step S231, the community currency settlement recording unit F37 of the management server 3 stores, in the settlement history data table D132 of the database D13, the settlement history based on the settlement result received in step S231. Next, in step S233, the management server 3 sends, to the user terminal 1 and the store terminal 2, the settlement history stored in the settlement history data table D132 in step S232.

In step S224, the store terminal 2 receives the settlement history sent from the management server 3 in step S233. Next, in step S225, the store terminal 2 stores the settlement history received in step S224 in the settlement history data table D121 of the store terminal database D12.

Moreover, in step S214, the user terminal 1 receives the settlement history sent from the management server 3 in step S233. Next, in step S215, the user terminal 1 stores the settlement history received in step S214 in the settlement history data table D112 of the user terminal database D11.

### (Electronic community currency premium burden amount determination processing)

The premium burden amount determination processing of the electronic community currency executed by the store terminal 2 and the management server 3 is now explained with reference to Fig. 8. Fig. 8 is a sequence diagram showing an example of the premium burden amount determination processing of the electronic community currency according to an embodiment of the present invention. The electronic community currency premium burden amount determination processing is executed, for example, at the timing of cashing/liquidating a part or all of the electronic community currency received by the store in the settlement, or at timing that the validity period of the electronic community currency becomes expired, for the electronic community currency which is the target of liquidation and in which the burden amount calculated flag T27 is "0" in the settlement history data table D132.

Foremost, in step S331, the community currency liquidation unit F37 of the management server 3 performs the liquidation processing for the issue amount of the electronic community currency. Next, in step S332, the premium burden amount calculation unit F39 of the management server 3 performs the calculation processing of the premium burden amount for each store based on the electronic community currency use status data table D134 in which the target records of the settlement history data table D132 of the database D13 have been aggregated. Moreover, in step S332, the premium burden amount calculation unit F39 performs the calculation processing of the operating cost burden amount of the electronic community currency for each store based on the electronic community currency use status data table D134.

In the calculation processing of the premium burden amount in step S332, the premium burden amount calculation unit F39 refers to the premium rate data table D133 (Fig. 4A), and confirms that the premium rate is 5% during the period P1, the premium rate is 3% during the period P2, the premium rate is 1% during the period P3, and the premium rate is 0% during the period P4.

Moreover, the premium burden amount calculation unit F39 performs the calculation processing of the premium burden amount based on the electronic community currency use status data table D134 (Fig. 4B) in which the target records of the settlement history data table D132 have been aggregated for calculating the settlement amount of each period for each store and the settlement total of the entire period.

In the example of Fig. 4B, because the settlement amount of the electronic community currency issued during the period P1 is 2000 and the premium rate is 5% in the store A, the premium burden amount during the period P1 will be 2000 × 0.05 = 100. Similarly, because the settlement amount of the electronic community currency issued during the period P2 is 4000 and the premium rate is 3% in the store A, the premium burden amount during the period P2 will be 120. Similarly, because the settlement amount of the electronic community currency issued during the period P3 is 6000 and the premium rate is 1% in the store A, the premium burden amount during the period P3 will be 60. Because the period P4 is 0, the premium burden amount during the period P4 is 0. Thus, the total premium burden amount of the store A will be 280.

Moreover, in the example of Fig. 4B, an amount obtained by multiplying the settlement total by a certain ratio (for instance, 1%) is calculated as the operating cost burden amount of each store, and the operating cost burden amount of the store A will be 140 as the result of multiplying the settlement total of 14,000 by 0.01. Nevertheless, without limitation to the above, the operating cost burden amount of each store may be a fixed amount for each store, or a smaller burden for a smaller-scale store, and various methods may be adopted.

Next, in step S333, the premium burden amount calculation unit F39 stores, in the columns of the premium burden amount T47 and the operating cost burden amount T48 of the electronic community currency use status data table D13, the premium burden amount and the operating cost burden amount of each store respectively calculated in step S332, and sets "1" in the burden amount calculated flag T27 of the settlement history data table D132. Next, in step S334, the management server 3 sends, to the store terminal 2, the premium burden amount and the operating cost burden amount of each store calculated in step S332.

Next, in step S321, the store terminal 2 performs the reception processing of the premium burden amount and the operating cost burden amount from the management server 3. Next, in step S322, the store terminal 2 performs the burden amount determination notification processing of outputting, to the UI 25, the premium burden amount and the operating cost burden amount received in step S322. Next, in step S323, the store terminal 2 stores, in the store terminal database D12, the premium burden amount and the operating cost burden amount received in step S322.

### (Effect of this embodiment)

According to this embodiment, in the operation of a small-scale electronic community currency in which the circulation period or operation period is limited, or the amount of issue or amount of circulation is limited, by comprehending the amount of issue, amount of circulation and all transactions thereof, it is possible to control the amount of circulation by changing the premium amount according to the amount of circulation, or cause the issuers, such as stores, to evenly bear the burden amount of the premium amount to be granted to the users.

Moreover, according to this embodiment, upon issuing the electronic community currency, by dynamically changing the premium amount to be added so that the electronic community currency will have a greater value when compared with the legal currency relative to the amount of circulation so as to promote or suppress the issue and use of the electronic community currency, the amount of issue and the amount of circulation of the electronic community currency can be properly controlled.

Moreover, according to this embodiment, in the circulation process from the issue, settlement and money exchange into the legal currency of the electronic community currency, by assigning an ID to the minimum unit of the electronic community currency and managing such minimum unit, even when the premium amount is dynamically controlled, the cost burden of the premium amount can be evenly borne by each store using the electronic community currency.

Moreover, according to this embodiment, the electronic community currency can also be introduced into a small-scale shopping street with multiple small-scale stores in addition to a specific large-scale store. Similarly, the electronic community currency can also be introduced in a limited time event such as a flea market in which individuals open their private shops.

### (Other embodiments)

(1) While the foregoing embodiment explained a case where the store comprises the store terminal 2 in the electronic community currency operation system S, the store does not need to comprise the terminal 2. In the foregoing case, the user terminal 1 reads the code including information such as the ID of the store, sends the settlement request to the management server 3, and the management server 3 performs the settlement processing.
(2) Moreover, in the foregoing embodiment, while the management server 3 evenly allotted the premium burden amount according to the period and the settlement amount, the premium burden amount may be changed depending on the size or role of the store. The premium burden amount calculation unit F39, for example, performs adjustment of uniformly lowering the premium rate upon calculating the premium burden amount by a predetermined ratio (for instance, 0.5%) for small-scale stores, or exempting the premium burden amount during a period when the premium amount was a fixed ratio or higher. The reduced or exempted premium burden amount may also be borne by the sponsor.
(3) Moreover, in the foregoing embodiment, the management server 3 controls the amount of issue or the amount of circulation of the electronic community currency by dynamically changing the premium rate. Nevertheless, the management server 3 can also control the amount of issue or the amount of circulation of the electronic community currency by promoting the active use of the electronic community currency by sending a notice to a user who has previously issued the electronic community currency to additionally an issue electronic community currency, or notifying the user that the validity period of the issued electronic community currency will expire shortly.
(4) In the foregoing embodiment, the user terminal 1 and the store terminal 2 respectively manage the settlement history based on the settlement history tables D112 and D121. Thus, the user terminal 1 and the store terminal 2 can comprehend, upon performing settlement with the electronic community currency, the settlement count and the settlement amount of the settlements performed in the past by the user in the corresponding store by aggregating the records of the settlement history data tables D112, D121 in which the value of the paying user ID_T24 coincides with the ID of the user of the user terminal 1, and the value of the receiving user ID_T25 coincides with the ID of the store of the store terminal 2. As a result of the user terminal 1 and the store terminal 2 being able to display the settlement count or the settlement amount when the aggregated settlement count or settlement amount is equal to or greater than a given value, it will be possible to recognize the counterparty which frequency conducts transactions or conducts large transactions, and thereby promote social interaction.

The present invention is not limited to the foregoing embodiments, and includes various modified examples. For example, the foregoing embodiments are a detailed explanation for explaining the present invention in an easy-to-understand manner, and the present invention is not necessarily limited to an embodiment comprising all of the explained configurations. Moreover, to the extent that there is no inconsistency, a part of the configuration of a certain embodiment may be substituted with the configuration of another embodiment, or the configuration of another embodiment may be added to the configuration of a certain embodiment. Moreover, a part of the configuration of each embodiment may be added, deleted, substituted, integrated or distributed. Moreover, the configurations and processes explained in the embodiments may be distributed or integrated as appropriate based on the processing efficiency or mounting efficiency.

### REFERENCE SIGNS LIST

S: electronic community currency operation system, 1: user terminal, F13: community currency processing unit, D11: user terminal database, 2: store terminal, F24: community currency settlement unit, D12: store terminal database, 3: management server, F35: community currency issuing unit, F36: community currency settlement recording unit, F38: premium amount determination unit, F39: premium burden amount calculation unit, D13: integrated database

## Claims

1. An electronic community currency operation system including a user terminal (1), a store terminal (2) and a management server (3) connected via a network (CN1),
wherein the user terminal (1) sends, to the management server (3), an issue request of an electronic community currency received from a user,
wherein the management server (3) includes:
an additional amount determination unit which determines an additional amount to be added to an issue amount (T16) of the electronic community currency, which is to be issued according to the issue request received from the user terminal (1), according to a current amount of circulation or a total amount of issue relative to an overall maximum issue of the electronic community currency; and
an issuing unit which issues, according to the issue request, the electronic community currency in which the additional amount determined by the additional amount determination unit has been added to the issue amount (T16), and notifies the issued electronic community currency to the user terminal (1), and
wherein the user terminal (1) receives, from the user, a settlement request using a total amount of the issue amount (T16) of the electronic community currency and the additional amount notified by the management server (3), and sends the received settlement request to the store terminal (2).

2. The electronic community currency operation system according to claim 1,
wherein the store terminal (2) performs settlement processing using a total amount of the issue amount (T16) of the electronic community currency and the additional amount notified to the user terminal (1) by the management server (3) according to the settlement request received from the user terminal (1), and notifies a settlement result of the settlement processing to the user terminal (1) and the management server (3).

3. The electronic community currency operation system according to claim 2,
wherein the management server (3):
includes a settlement recording unit which records a settlement history including a settlement date and time of the settlement processing in which the settlement result was notified from the store terminal (2), an ID of the user terminal (1), an ID of the store terminal (2), an issue amount (T16) used in the settlement, and an additional amount that was added to the issue amount (T16); and
sends the settlement history to the user terminal (1) and the store terminal (2).

4. The electronic community currency operation system according to claim 3,
wherein the additional amount determination unit evaluates whether a point in time that the issue request was sent falls within any period among a plurality of periods in which a validity period of the electronic community currency has been divided, and determines the additional amount according to the current amount of circulation or the total amount of issue relative to the maximum issue based on an addition rate for each evaluated period.

5. The electronic community currency operation system according to claim 4,
wherein the addition rate is a first positive value when promoting an issue of the electronic community currency, a second positive value that is smaller than the first positive value when suppressing an issue of the electronic community currency, and a value of 0 or less when promoting a liquidation of the electronic community currency.

6. The electronic community currency operation system according to claim 4,
wherein the period is determined based on a threshold of a ratio of the current amount of circulation or the total amount of issue relative to the maximum issue.

7. The electronic community currency operation system according to claims 4,
wherein the period can be adjusted for controlling the amount of circulation or the amount of issue of the electronic community currency.

8. The electronic community currency operation system according to claim 4,
wherein the management server (3) includes a burden amount calculation unit which, based on the settlement history, aggregates an issue amount (T16) for each of the periods for each store equipped with the store terminal (2), multiplies an addition rate for each of the periods by an aggregated value of the issue amount (T16) for each of the stores and each of the periods, and calculates a burden amount of the additional amount for each of the stores.

9. The electronic community currency operation system according to claim 8,
wherein the burden amount calculation unit adjusts the burden amount.

10. The electronic community currency operation system according to claim 8,
wherein the burden amount calculation unit calculates an operating cost burden amount (T48) of the electronic community currency for each of the stores according to an aggregated value of the issue amount (T16) for each of the stores.

11. The electronic community currency operation system according to claim 1,
wherein the management server (3) sends, to the user terminal (1) that issued the electronic community currency, a notice urging an additional issue request of the electronic community currency, or a notice to inform that the validity period of the electronic community currency will expire soon.

12. The electronic community currency operation system according to claim 3,
wherein the user terminal (1) and the store terminal (2), based on the settlement history, output a result of aggregating a settlement count or a settlement amount of the settlement processing previously performed between the mutual terminals when the user terminal (1) and the store terminal (2) perform the settlement processing.

13. A management server of an electronic community currency operation system (S) connected to a user terminal (1) and a store terminal (2) via a network (CN1), comprising:
an additional amount determination unit which receives, from the user terminal (1), an issue request of an electronic community currency received from a user, and determines an additional amount to be added to an issue amount (T16) of the electronic community currency, which is to be issued according to the issue request received from the user terminal (1), according to a current amount of circulation or a total amount of issue relative to an overall maximum issue of the electronic community currency; and
an issuing unit which issues, according to the issue request, the electronic community currency in which the additional amount determined by the additional amount determination unit has been added to the issue amount (T16), and notifies the issued electronic community currency to the user terminal (1).

14. An electronic community currency operation method performed by an electronic community currency operation system (S) including a user terminal (1), a store terminal (2) and a management server (3) connected via a network (CN1), comprising the steps of:
the user terminal (1) sending, to the management server (3), an issue request of an electronic community currency received from a user;
the management server (3):
determining an additional amount to be added to an issue amount (T16) of the electronic community currency, which is to be issued according to the issue request received from the user terminal (1), according to a current amount of circulation or a total amount of issue relative to an overall maximum issue of the electronic community currency; and
issuing, according to the issue request, the electronic community currency in which the determined additional amount has been added to the issue amount (T16), and notifies the issued electronic community currency to the user terminal (1); and
the user terminal (1) receiving, from the user, a settlement request using a total amount of the issue amount (T16) of the electronic community currency and the additional amount notified by the management server (3), and sending the received settlement request to the store terminal (2).
